# EUROPÄISCHE PATENTSCHRIFT

(11) **EP 1 314 867 B1**
(45) Veröffentlichungstag und Bekanntmachung des Hinweises auf die Patenterteilung: **24.11.2010**
(21) Anmeldenummer: 02020707.2
(22) Anmeldetag: 14.09.2002
(51) Int. Cl.: F01N 13/18, F01N 13/14

(54) **Abgasleitung und Verfahren zur Herstellung einer Abgasleitung**
Exhaust line and method of manufacturing an exhaust line
Elément de ligne d'échappement et procédé de fabrication d'un élément de ligne d'échappement

(30) Priorität: 21.11.2001 DE 10157131
(43) Veröffentlichungstag der Anmeldung: 28.05.2003
(73) Patentinhaber: Benteler Automobiltechnik GmbH & Co. KG, 33102 Paderborn (DE)
(72) Erfinder: Gabriel, Heinrich, 34434 Borgentreich (DE); Bolte, Albrecht, 34396 Liebenau (DE); Humburg, Erhardt, 34414 Warburg (DE); Smatloch, Christian, Dr., 33100 Paderborn (DE); Kleinschmidt, Jürgen, 37688 Beverungen (DE)
(74) Vertreter: Ksoll, Peter

(56) Entgegenhaltungen:
- EP-A- 0 537 603
- DE-A- 4 107 539
- DE-A- 19 857 445
- DE-A- 19 929 423
- DE-U- 9 205 294
- US-A- 5 158 061
- US-A- 5 784 881
- US-B1- 6 216 742
- PATENT ABSTRACTS OF JAPAN Bd. 1996, Nr. 06, 28. Juni 1996 (1996-06-28) & JP 08 042335 A (NISSAN MOTOR CO LTD), 13. Februar 1996 (1996-02-13)

## Beschreibung

Die Erfindung betrifft eine Abgasleitung mit den Merkmalen des Patentanspruchs 1 sowie ein Verfahren zur Herstellung einer Abgasleitung nach den Maßnahmen des Patentanspruchs 13.

Verbrennungsmotoren werden heute in der Regel mit Dreiwege-Katalysatoren zur Abgasreinigung ausgerüstet. Dreiwege-Katalysatoren benötigen eine bestimmte Starttemperatur, ab der ihre eigentliche Funktion der Abgasreinigung beginnt. Die Zeit bis zum Erreichen dieser Starttemperatur, die sogenannte "light of time" wird durch entsprechende Abgasnormen des Gesetzgebers immer weiter verkürzt, wobei die Arbeitstemperatur von > 350°C in möglichst kurzer Zeit erreicht werden soll.

Durch den Einsatz luftspaltisolierter Abgasleitungen zwischen dem Zylinderauslass und dem Katalysator sind diese Normen einzuhalten. Luftspaltisolierte Abgasleitungen sind in der Regel zweiwandig ausgeführt und weisen ein dünnwandiges Innenrohr und ein dickerwandiges Außenrohr auf, die durch einen Luftspalt voneinander getrennt sind. Die isolierende Wirkung des Luftspaltes, die geringe Masse des Innenrohrs und die damit verbundene geringe Wärmekapazität des Innenrohrs führen zu einer Minimierung der Wärmeverluste, so dass der Katalysator in der Startphase schnell seine Starttemperatur erreicht. Dem Außenrohr kommt dabei eine tragende und abdichtende Funktion zu.

Derartige luftspaltisolierte Abgasrohre kommen auch als Verbindung des Zylinderauslasses mit einem Abgasturbolader zur Anwendung. Durch den verringerten Wärmeverlust in einem luftspaltisolierten Abgasrohr wird dem Abgas auf seinem Weg zum Abgasturboleiter weniger Energie entzogen als bei Ausführungen ohne Luftspaltisolierung, so dass am Abgasturbolader mehr Energie für die Umwandlung zur Verfügung steht. Eine luftspaltisolierte Abgasleitung trägt somit zur Steigerung des Wirkungsgrads eines Abgasturboladers bei.

Problematisch ist jedoch die Anbindung der Abgasleitung zwischen zwei festen Anschlusspunkten, z.B. einem Abgaskrümmer und einem Abgasturbolader. Das Außenrohr muss in der Lage sein, sowohl die eigene thermische Ausdehnung als auch evtl. auftretende thermische Ausdehnungen von angrenzenden Anbauteilen, wie dem Krümmer oder dem Abgasturbolader kompensieren zu können. Der schnelle Temperaturanstieg in einem Abgasrohr führt zudem zu einem Temperaturgefälle zwischen dem Innenrohr und dem Außenrohr, so dass zusätzlich Relativbewegungen zwischen dem Innenrohr und dem Außenrohr ausgeglichen werden müssen. Diese Anforderungen lassen sich mit geeigneten Dehnungsausgleichem erfüllen, die eine Relativbewegung zwischen dem Innen- und dem Außenrohr zulassen.

Aus der US 6,216,742 B1 ist ein wärmeisoliertes Rohr bekannt, das einen doppelwandigen Aufbau mit zumindest bereichsweise vorhandenem Luftspalt besitzt. Das Außenrohr ist aus einem isolierenden Werkstoff gefertigt. Das Innenrohr ist mit einer Wellung versehen, so dass durch die Wellung ein Dehnungsausgleich erfolgen kann. Nachteilig hieran ist, dass die Wellung zu Strömungsverlusten führt.

Eine Lösung für einen Schiebesitz im Bereich eines Abgaskrümmers wird in dem US-Patent US 5,784,881 A beschrieben. Es wird bei einem einwandigen Krümmerrohr vorgeschlagen, die Enden über einen Schiebesitz miteinander zu verbinden. Hierbei greift das Vaterstück unter Eingliederung einer Schiebesitzhülse in ein im Durchmesser größeres Mutterstück ein. Um den Austritt von Abgasen zu verhindern, ist der Schiebesitzbereich von einem Faltenbalg außenseitig umgeben. Die Hülse im Bereich des Schiebesitzes soll eine bessere Relativverlagerbarkeit der Längenabschnitte des Abgasrohrs gewährleisten.

Der Erfindung liegt hiervon ausgehend die Aufgabe zugrunde, ein isoliertes Abgasrohr bereitzustellen, das in einfacher Bauweise auftretende thermische Längenänderungen kompensieren kann, sowie ein materialschonendes und montagefreundliches Verfahren zur Herstellung eines Abgasrohrs mit den zuvor beschriebenen Eigenschaften aufzuzeigen.

Der gegenständliche Teil der Erfindung wird durch eine Abgasleitung mit den Merkmalen des Patentanspruchs 1 gelöst.

Die erfindungsgemäße Abgasleitung zeichnet sich dadurch aus, dass sie einen ersten Längenabschnitt mit einem ersten Außenrohr und einem ersten Innenrohr sowie einen zweiten Längenabschnitt mit einem zweiten Außenrohr und einem zweiten Innenrohr umfasst. Zwischen den Außenrohren und den Innenrohren eines jeden Längenabschnitts ist zumindest abschnittsweise ein Ringspalt vorhanden. Die Längenabschnitte der Abgasleitungen sind mit ihren einander benachbarten Enden zueinander längsverschieblich ineinander gesteckt. Wesentlich ist, dass an den benachbarten Enden ein Endstück des ersten Außenrohrs, ein Endstück des zweiten Außenrohrs unter Eingliederung eines Endabschnitts des ersten Innenrohrs umgreift. Durch diese Anordnung der Endabschnitte und Endstücke wird ein doppelter Schiebesitz ausgebildet. Dadurch, dass der Endabschnitt des ersten Innenrohrs zwischen die beiden Endstücke der Außenrohre greift, ist eine günstige Lageorientierung des Endabschnitts des ersten Innenrohrs gegeben.

Nach der Weiterbildung des Patentanspruchs 2 ist vorgesehen, dass ein Endabschnitt des zweiten Innenrohrs dem Endstück des zweiten Außenrohrs längsverschieblich zugeordnet ist. Durch dieses Merkmal ist im Bereich der Enden der Längenabschnitte nur eine einzelne sehr kompakt gestaltbare Wärmebrücke vorhanden, bei der ein dreifacher Schiebesitz realisiert ist. Einerseits ist das erste Innenrohr gegenüber dem ersten Außenrohr relativ verschieblich und gleichzeitig auch gegenüber dem Endstück des zweiten Außenrohrs. Das zweite Innenrohr liegt nach Patentanspruch 3 gleichzeitig an dem Endstück des zweiten Außenrohrs an.

Bei dieser Anordnung der Endabschnitte und Endstücke ist eine Kompensation von großen Wärmeausdehnungen möglich, und zwar zwischen den einzelnen Innenrohren, zwischen den einzelnen Außenrohren als auch zwischen den Außenrohren gegenüber den Innenrohren. Durch diese spezielle Art einer dreifachen Schiebesitzausführung bleibt der wirksame Ringspalt über die gesamte Länge der Abgasleitung ohne weitere Wärmebrücken vorhanden.

Nach den Merkmalen des Patentanspruchs 4 sind die benachbarten Enden der Längenabschnitte fluiddicht miteinander verbunden. Es ist nicht zwangsläufig erforderlich, dass die Endabschnitte der Außenrohre unmittelbar auf den Endstücken der Innenrohre aufliegen, sondern es ist im Rahmen der Erfindung auch möglich, dass nur ein mittelbarer Kontakt über zwischengefügte Dichtungsbauteile besteht. Die Dichtungsbauteile verhindern dabei den Austritt von Abgasen aus der Abgasleitung.

Vorteilhaft sind die benachbarten Endstücke der Außenrohre von einem Relativverschiebungen der Endstücke ausgleichenden Bauteil fluiddicht gekapselt (Patentanspruch 5). Die fluiddichte Kapselung durch ein separates Bauteil hat gegenüber der Eingliederung von Dichtungsbauteilen in den Schiebesitz den Vorteil, dass der Schiebesitz konstruktiv einfacher gestaltbar ist. Durch den Einsatz eines Relativverschiebungen ausgleichenden Bauteils an den Außenrohren erfolgt eine funktionale Trennung im Bereich des Schiebesitzes. Die fluiddichte Kapselung wird durch ein separates Bauteil realisiert, während der Ausgleich der Relativverschiebung durch den dreifachen Schiebesitz erfolgt.

Faltenbalge sind besonders vorteilhaft zum Ausgleich von Relativverschiebungen bei gleichzeitiger fluiddichter Kapselung eines Abgasrohrs geeignet (Patentanspruch 6). Je nachdem, welche Anforderungen an die Dauerhaltbarkeit eines Faltenbalgs gestellt werden, kann dieser grundsätzlich als Austauschbauteil der Abgasleitung zugeordnet sein. Die Faltenbalggeometrie kann leicht geändert werden, beispielsweise durch Änderung der Anzahl der Falten.

Gegenstand des Patentanspruchs 7 ist, dass den voneinander abgewandten Enden der Längenabschnitte Flansche zugeordnet sind. Nach Patentanspruch 8 sind die Außenrohre und die Innenrohre wenigstens mittelbar fest mit den zugeordneten Flanschen verbunden. Die Flansche dienen zur Befestigung der Abgasleitung an andere Komponenten der Verbrennungsmaschine, wie z.B. einem Abgasturbolader oder einem Katalysator. Die Flansche stellen somit für die Längenabschnitte der Abgasleitung Festlager dar. Die konstruktive Ausgestaltung des Festlagers hängt von den jeweiligen Anforderungen an die Lagerung ab. Die einzelnen Längenabschnitte können z.B. mit den Flanschen kraftschlüssig oder formschlüssig verbunden sein. Die Außenrohre der Abgasleitung können auch in die Flansche gesteckt sein. Während die Außenrohre fest mit den Flanschen verbunden, insbesondere verschweißt sind, können die Innenrohre entweder unmittelbar mit den Flanschen verschweißt sein oder sie sind mit den Außenrohren verschweißt und über diese fest mit den Flanschen verbunden (Patentanspruch 8).

Zur Erzielung möglichst geringer Abgasgegendrücke ist der Innendurchmesser des zweiten Innenrohrs konstant und entspricht dem Innendurchmesser des ersten Innenrohres im Bereich des Ringspalts (Patentanspruch 9). Mit konstantem Innendurchmesser ist an dem Rahmen der Fertigungstoleranzen weitgehend gleichbleibender Innendurchmesser in jeder Querschnittsebene quer zur Längserstreckung der Abgasleitung zu verstehen. Hierbei muss die Abgasleitung nicht notwendigerweise einen kreisrunden Querschnitt besitzen. Der Querschnitt kann von der kreisrunden Form abweichend sein und z.B. eine elliptische Form aufweisen.

Zur Minimierung der Wärmeverluste ist nach Patentanspruch 10 vorgesehen, dass die Außenrohre im Bereich der Enden im Durchmesser reduziert sind. Das bedeutet, dass lediglich im Bereich der Enden der Längenabschnitte eine Annäherung der Außenrohre an die Innenrohre stattfindet und somit der Ringspalt verkleinert ist. Vorteilhaft sind die flanschseitigen Endstücke der Außenrohre so weit im Durchmesser reduziert dass sie auf dem Endabschnitt des Innenrohrs aufliegen und gemeinsam mit diesem in den Flansch eingreifen.

Die einzelnen Längenabschnitte sind gemäß den Merkmalen des Patentanspruchs 11 in vorteilhafter Weise durch Innenhochdruckverformung herstellbar. Während sich bereits gute Ergebnisse für die Isolierung einer Abgasleitung durch einen luftgefüllten Ringspalt erzielen lassen, ist nach Anspruch 12 vorgesehen, dass der Ringspalt zusätzlich mit einem Isoliermaterial gefüllt ist.

Der verfahrensmäßige Teil der Erfindung wird durch die Maßnahmen des Patentanspruchs 13 gelöst. Danach wird bei einem Verfahren zur Herstellung einer Abgasleitung zwischen einem Innenrohr und einem Außenrohr eines doppelwandigen Rohrs durch Innenhochdruckverformung zumindest bereichsweise ein Ringspalt ausgebildet. Ein erster Ringspalt ist dabei einem ersten Längenabschnitt zugeordnet und ein zweiter Ringspalt einem zweiten Längenabschnitt. Die beiden Längenabschnitte sind über ihre einander benachbarten Enden miteinander verbunden. Im Anschluss an die Innenhochdruckverformung werden die beiden Längenabschnitte zwischen ihren einander benachbarten Enden getrennt. Diese Enden sind in ihren jeweiligen Durchmessern aufeinander abgestimmt und können nun unter Bildung eines Schiebesitzes zusammengesteckt werden. Dieses Verfahren eignet sich insbesondere zur Herstellung eines Abgasrohrs nach einem der Patentansprüche 1 bis 12.

Die Innenhochdruckverformung eines doppelwandigen Rohrs ist ein besonders materialschonendes und materialsparendes Fertigungsverfahren. Insbesondere wenn zwischen den einander benachbarten Enden der Längenabschnitte ein Übergangsabschnitt des doppelwandigen Rohrs herausgetrennt wird, fällt lediglich dieser Übergangsabschnitt als Verschnitt an (Patentanspruch 14). Durch die Innenhochdruckverformung kann dieser Übergangsabschnitt in Längsrichtung sehr schmal gestaltet sein, so dass es mit der Maßnahme des Patentanspruchs 15 möglich ist, den Übergangsabschnitt mit einem einzigen Trennschnitt heraus zu trennen. Dies setzt ein entsprechend breites Trennmittel voraus. Diese Anforderung kann beispielsweise ein Sägeblatt erfüllen.

Die Enden der voneinander getrennten Längenabschnitte werden nach der Maßnahme des Anspruchs 16 vor dem Zusammenstecken entgratet. Das Entgraten erleichtert das Ineinanderstecken der Enden zu einem Schiebesitz, insbesondere bei eng gewählten Toleranzbereichen.

Das erfindungsgemäße Verfahren lässt sich insbesondere dann vorteilhaft einsetzen, wenn das Außenrohr und das Innenrohr im Bereich der benachbarten Enden aneinander anliegen. Durch die flächige Berührung des Innenrohrs mit dem Außenrohr im Bereich der Enden ist das Innenrohr sehr gut lagefixiert, wodurch exakte Trennschnitte möglich sind. Eine zusätzliche Lagefixierung des Innenrohrs vor dem Trennschnitt, beispielsweise durch in das Innenrohr eingeführte Dorne, ist nicht erforderlich. Insbesondere wenn der Außendurchmesser des einen benachbarten Endes kleiner ist als der Innendurchmesser des anderen benachbarten Endes ergibt sich daraus, dass das im Durchmesser kleinere Ende in das andere Ende gesteckt werden kann. Die Enden sind dabei in ihren Durchmessern so konfiguriert, dass eine Spielpassung zwischen dem Außendurchmesser des innen liegenden Endes und dem Innendurchmesser des außen liegenden Endes gegeben ist, so dass ein Relativverschiebungen der Außenrohre und Innenrohre ausgleichender Schiebesitz zwischen den einzelnen Längenabschnitten der Abgasleitung vorhanden ist. Das erfindungsgemäße Verfahren ist aufgrund der geringen Anzahl durchzuführender Fertigungsschritte sehr einfach und kostengünstig, zugleich materialschonend und materialsparend sowie ausgesprochen montagefreundlich.

Die Erfindung wird nachfolgend anhand eines in schematischen Zeichnungen dargestellten Ausführungsbeispiels näher erläutert. Es zeigen:
- Figur 1: im Längsschnitt eine doppelwandige Abgasleitung mit einem Schiebesitz und
- Figur 2: im Längsschnitt ein doppelwandiges Rohr in einer Fertigungsvorstufe zur Herstellung einer Abgasleitung.

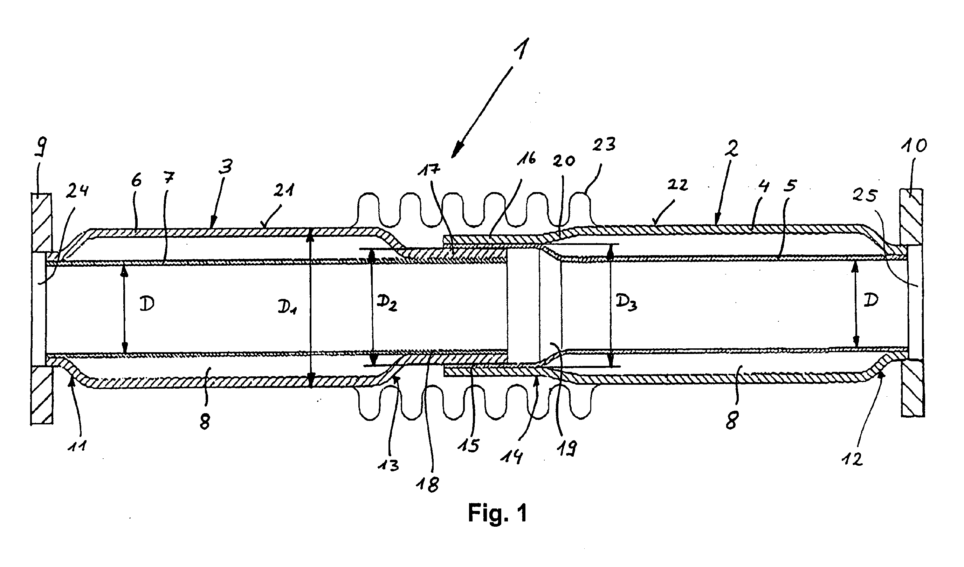

Figur 1 zeigt eine Abgasleitung 1, die in einen ersten Längenabschnitt 2 und einen zweiten Längenabschnitt 3 gegliedert ist. Die Abgasleitung 1 ist als doppelwandiges Rohr ausgeführt mit einem ersten Außenrohr 4 und einem ersten Innenrohr 5 im ersten Längenabschnitt 2 und einem zweiten Außenrohr 6 und einem zweiten Innenrohr 7 im zweiten Längenabschnitt 3. Die Außenrohre 4, 6 und die Innenrohre 5, 7 sind konzentrisch zueinander angeordnet, wobei zur Isolierung ein Ringspalt 8 zwischen den Außenrohren 4, 6 und den Innenrohren 5, 7 vorhanden ist. In diesem Ausführungsbeispiel ist die Abgasleitung 1 im wesentlichen gerade ausgeführt. Die Abgasleitung kann selbstverständlich auch in ihrer Längserstreckung gekrümmt sein.

Die Abgasleitung 1 erstreckt sich zwischen Flanschen 9, 10 zur Anbindung der Abgasleitung 1 an andere Baugruppen. Die Flansche 9, 10 fungieren hierbei als Festlager für die einzelnen Längenabschnitte 2, 3 der Abgasleitung 1. Hierzu sind die einander abgewandten Enden 11, 12 der Längenabschnitte 2, 3 fest mit den Flanschen 9, 10 verbunden.

Die einander benachbarten Enden 13, 14 der Längenabschnitte 2, 3 sind aufgrund der bei einer Abgasleitung auftretenden thermisch bedingten Längenänderungen längsverschieblich ineinander gesteckt. Die Enden 13, 14 der einzelnen Längenabschnitte 2, 3 bilden hierbei einen speziell konfigurierten Schiebesitz aus. Grundsätzlich greift hierbei der zweite Längenabschnitt 3 in den ersten Längenabschnitt 2 ein. Das besondere bei dieser Ausführungsform ist, dass im Bereich der Enden 13, 14 der Längenabschnitte 2, 3 ein Endabschnitt 15 des ersten Innenrohrs 5 zwischen ein Endstück 16 des ersten Außenrohrs 4 und ein Endstück 17 des zweiten Außenrohrs 6 greift. Der Endabschnitt 15 des ersten Innenrohrs 5 erfährt dadurch eine zweiseitige radiale Lagerung. Einerseits kontaktiert der Endabschnitt 15 auf seinem Außenumfang die Innenfläche des ersten Außenrohrs 4 und gleichzeitig mit seiner Innenfläche den Außenumfang des Endstücks 17 des zweiten Außenrohrs 6. Durch diese Anordnung ist auch ein doppelter Schiebesitz zwischen den Endstücken 16, 17 der Außenrohre 4, 6 vorhanden. Einerseits ist der Endabschnitt 15 gegenüber dem außen anliegenden Endstück 16 in Längsrichtung verschiebbar und andererseits gegenüber dem innen liegenden Endstück 17.

Die dritte Lagerstelle des Schiebesitzes der Enden 13, 14 befindet sich zwischen dem zweiten Außenrohr 6 und dem zweiten Innenrohr 7 des zweiten Längenabschnitts. Das zweite Innenrohr 7 besitzt über seine gesamte Länge einen konstanten Innendurchmesser D, der mit einem konstanten Strömungsquerschnitt gleichzusetzen ist. Dementsprechend ist das zweite Außenrohr 6 im Bereich seines dem anderen Längenabschnitt 2 zugewandten Endes 13 konisch verjüngt, wodurch das Außenrohr 6 im Bereich seines im Querschnitt verjüngten Endstücks 17 an einem Endabschnitt 18 des zweiten Innenrohrs 7 anliegt. Durch diese Konfiguration ist das Endstück 17 des zweiten Außenrohrs 6 sowohl an seinem Außenumfang als auch an seinem Innenumfang von in Längsrichtung relativ verschiebbaren Baugruppen umgeben, nämlich den Endabschnitten 15, 18 der Innenrohre 5, 7.

Da der Innendurchmesser D des zweiten Innenrohrs 7 über seine gesamte Länge konstant ist, verjüngt sich der Außendurchmesser D1 des zweiten Außenrohrs 6 im Bereich des Ringspalts 8 auf einen Außendurchmesser D2 im Bereich des Endstücks 17. Dieses Maß ist zugleich wieder Innenmaß für das erste Innenrohr 5, das von dem Innendurchmesser D über einen konischen Übergang 19 auf das Außenmaß D2 des zweiten Außenrohrs 6 aufgeweitet ist. Der Durchmesser D des ersten Innenrohrs 5 entspricht hierbei dem Durchmesser D des zweiten Innenrohrs 7, da über die gesamte Länge der Abgasleitung 1 ein möglichst konstanter Strömungsquerschnitt gegeben sein soll.

Zur Realisierung des Schiebesitzes zwischen dem Endstück 16 und dem Endabschnitt 15 des ersten Längenabschnitts 2 ist der Innendurchmesser D3 des ersten Außenrohrs 4 im Bereich seines Endstücks 16 auf das Außenmaß des Endabschnitts 15 über einen konischen Übergang 20 reduziert.

Die Durchmesser im Bereich der Schiebesitze sind selbstverständlich so gewählt, dass es aufgrund der thermischen Ausdehnung weder zu Verspannungen in radialer Richtung noch zu Verklemmungen in axialer Richtung kommen kann. Das bedeutet, dass die Überlappung der Enden 13, 14 ausreichend groß ist, und zudem die Toleranzen der einzelnen Durchmesser so gewählt sind, dass die Bauteile auch bei höheren Temperaturen nicht in einer Weise aneinander gepresst sind, die eine Relativverlagerung der Längenabschnitte 2, 3 behindern würde.

Aufgrund der notwendigen Toleranzen zwischen den Endabschnitten 15, 18 und den Endstücken 16, 17 ist ein geringfügiger Gasaustritt zwischen den Enden 13, 14 möglich. Ein mit den Außenflächen 21, 22 der Außenrohre 4, 6 verbundener Faltenbalg 23 verhindert den Austritt von Abgasen aus der Abgasleitung 1. Die Längenabschnitte 2, 3 der Abgasleitung 1 sind somit fluiddichtend miteinander verbunden, wobei der Faltenbalg 23 durch seine Formgebung in der Lage ist, Längsverschiebungen zwischen den Längenabschnitten 2, 3 auszugleichen. Der Faltenbalg 23 kann mit den Außenflächen 21, 22 unlösbar oder lösbar verbunden sein.

An den flanschseitigen Enden 11, 12 der Längenabschnitte 2, 3 ist der Durchmesser D1 der Außenrohre 4, 6 ebenfalls wie an dem Ende 13 des zweiten Längenabschnitts 3 auf das Maß D2 reduziert. Hier greifen die Enden 11, 12 in eine Durchströmöffnung 24, 25 der Flansche 9, 10 ein.

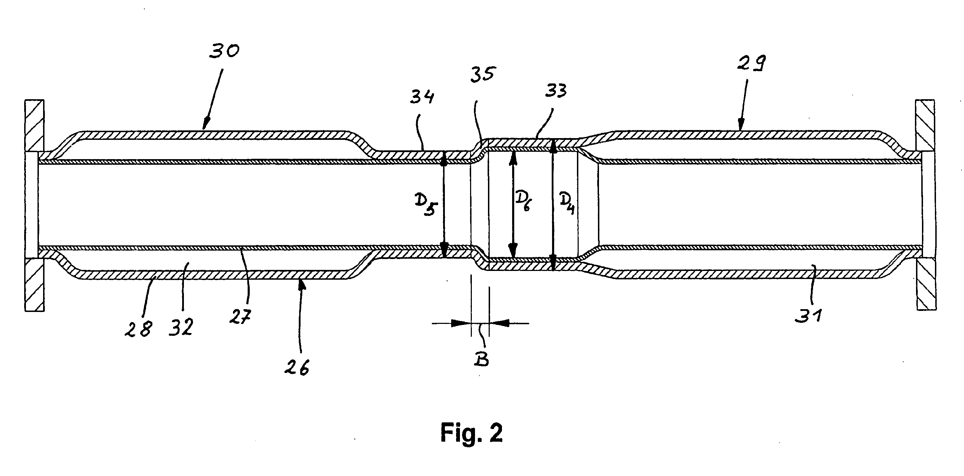

Figur 2 zeigt in der Darstellung der Figur 1 eine Fertigungsvorstufe bei der Herstellung der Abgasleitung 1 gemäß Figur 1. Basis für die Abgasleitung der Figur 1 ist ein doppelwandiges Rohr 26 mit einem Innenrohr 27 und einem Außenrohr 28. Das Rohr 26 gliedert sich wiederum in einen ersten Längenabschnitt 29 und einen zweiten Längenabschnitt 30, wobei sich zwischen dem Innenrohr 27 und dem Außenrohr 28 in jedem Längenabschnitt 29, 30 ein Ringspalt 31, 32 befindet. Im mittleren Bereich zwischen den Längenabschnitten 29 und 30 ist das Rohr 26 zweistufig eingeschnürt. Die Einschnürung des Rohrs 26 bildet den Bereich, der später als Schiebesitz ausgestaltet sein soll. Die Längenabschnitte 29, 30 des Rohrs 1 werden hierzu zwischen ihren im Bereich der Einschnürung liegenden benachbarten Enden 33, 34 in einem Übergangsabschnitt 35 voneinander getrennt. Der Übergangsabschnitt 35 besitzt eine Breite B, die mit einem einzigen Trennschnitt zwischen den Enden 33, 34 heraus getrennt werden kann. Hierzu kann ein entsprechend breites Sägeblatt verwendet werden. Es ist aber auch möglich, zwei einzelne Trennschnitte vorzusehen, um den Übergangsabschnitt 35 zu entfernen.

Im Bereich des Übergangsabschnitts 35 findet auch gleichzeitig ein Übergang zwischen dem größeren Außendurchmesser D4 des einen Endes 33 auf den kleineren Außendurchmesser D5 des anderen Endes statt. Dabei ist D5 kleiner als der Innendurchmesser D6 des Endes 33 des ersten Längenabschnitts 29. Der Außendurchmesser D5 und der Innendurchmesser D6 der korrespondierenden Enden 33, 34 sind so bemessen, dass sie nach dem Heraustrennen des Übergangsabschnitts 35 zu einem Schiebesitz zusammengesteckt werden können. Vor dem Zusammenfügen der Enden 33, 34 können diese zusätzlich noch entgratet werden.

### Bezugszeichenaufstellung:

- 1: Abgasleitung
- 2: erster Längenabschnitt von 1
- 3: zweiter Längenabschnitt von 1
- 4: erstes Außenrohr von 2
- 5: erstes Innenrohr von 2
- 6: zweites Außenrohr von 3
- 7: zweites Innenrohr von 3
- 8: Ringspalt
- 9: Flansch
- 10: Flansch
- 11: Ende von 1
- 12: Ende von 1
- 13: Ende von 3
- 14: Ende von 2
- 15: Endabschnitt von 5
- 16: Endstück von 4
- 17: Endstück von 6
- 18: Endabschnitt von 7
- 19: konischer Übergang von 5
- 20: konischer Übergang von 4
- 21: Außenfläche von 6
- 22: Außenfläche von 4
- 23: Faltenbalg
- 24: Durchströmöffnung von 9
- 25: Durchströmöffnung von 10
- 26: Rohr
- 24: Innenrohr v. 26
- 28: Außenrohr v. 26
- 29: erster Längenabschnitt v. 26
- 30: zweiter Längenabschnitt v. 26
- 31: erster Ringspalt
- 32: zweiter Ringspalt
- 33: Ende v. 29
- 34: Ende v. 30
- 35: Übergangsabschnitt

- B: Breite v. 35
- D: Durchmesser von 7
- D1: Außendurchmesser von 4, 6
- D2: Außendurchmesser von 17
- D3: Innendurchmesser von 16
- D4: Außendurchmesser v. 33
- D5: Außendurchmesser v. 34
- D6: Innendurchmesser v. 33

## Patentansprüche

1. Abgasleitung mit einem ersten Längenabschnitt (2) mit einem ersten Außenrohr (4) und einem ersten Innenrohr (5) sowie einem zweiten Längenabschnitt (3) mit einem zweiten Außenrohr (6) und einem zweiten Innenrohr (7), wobei zwischen den Außenrohren (4, 6) und den Innenrohren (5, 7) eines Längenabschnitts (2, 3) zumindest abschnittsweise ein Ringspalt (8) vorhanden ist, **dadurch gekennzeichnet, dass** die beiden Längenabschnitte (2, 3) mit ihren einander benachbarten Enden (13, 14) zueinander längsverschieblich ineinander gesteckt sind, wobei an den benachbarten Enden (13, 14) ein Endstück (16) des ersten Außenrohrs (4) ein Endstück (17) des zweiten Außenrohrs (6) unter Eingliederung eines Endabschnitts (15) des ersten Innenrohrs (5) umgreift, wobei die Endstücke (16, 17) der Außenrohre (4, 6) und der Endabschnitt (15) des ersten Innenrohrs (5) jeweils längsverschieblich zueinander sind.

2. Abgasleitung nach Anspruch 1, **dadurch gekennzeichnet, dass** ein Endabschnitt (18) des zweiten Innenrohrs (7) dem Endstück (17) des zweiten Außenrohrs (6) längsverschieblich zugeordnet ist.

3. Abgasleitung nach Anspruch 2, **dadurch gekennzeichnet, dass** der Endabschnitt (18) des zweiten Innenrohrs (7) an dem Endstück (17) des zweiten Außenrohrs (6) anliegt.

4. Abgasleitung nach einem der Ansprüche 1 bis 3, **dadurch gekennzeichnet, dass** die benachbarten Enden (13, 14) der Längenabschnitte (2, 3) fluiddicht miteinander verbunden sind.

5. Abgasleitung nach einem der Ansprüche 1 bis 4, **dadurch gekennzeichnet, dass** die benachbarten Endstücke (16, 17) der Außenrohre (4, 6) von einem Relativverschiebungen der Endstücke (16, 17) ausgleichenden Bauteil (23) fluiddicht gekapselt sind.

6. Abgasleitung nach Anspruch 5, **dadurch gekennzeichnet, dass** das Bauteil ein Faltenbalg (23) ist.

7. Abgasleitung nach einem der Ansprüche 1 bis 6, **dadurch gekennzeichnet, dass** den voneinander abgewandten Enden (11, 12) der Längenabschnitte (2, 3) Flansche (9, 10) zugeordnet sind.

8. Abgasleitung nach Anspruch 7, **dadurch gekennzeichnet, dass** die Außenrohre (4, 6) und die Innenrohre (5, 7) wenigstens mittelbar fest mit den zugeordneten Flanschen (9, 10) verbunden sind.

9. Abgasleitung nach einem der Ansprüche 1 bis 8, **dadurch gekennzeichnet, dass** der Innendurchmesser (D) des zweiten Innenrohrs (7) konstant ist und dem Innendurchmesser (D) des ersten Innenrohrs (5) im Bereich des Ringspalts (8) entspricht.

10. Abgasleitung nach einem der Ansprüche 1 bis 9, **dadurch gekennzeichnet, dass** die Außenrohre (6) im Bereich der Enden (11, 13; 12, 14) im Durchmesser reduziert sind.

11. Abgasleitung nach einem der Ansprüche 1 bis 10, **dadurch gekennzeichnet, dass** die einzelnen Längenabschnitte (2, 3) durch Innenhochdruckverformung hergestellt sind.

12. Abgasleitung nach einem der Ansprüche 1 bis 11, **dadurch gekennzeichnet, dass** der Ringspalt (8) mit einem Isoliermaterial gefüllt ist.

13. Verfahren zur Herstellung einer Abgasleitung, bei welchem zwischen einem Innenrohr (27) und einem Außenrohr (28) eines doppelwandigen Rohrs (26) durch Innenhochdruckverformung zumindest bereichsweise ein Ringspalt (31, 32) ausgebildet wird, **dadurch gekennzeichnet, dass** ein erster Ringspalt (31) in einem ersten Längenabschnitt (29) und ein zweiter Ringspalt (32) in einem zweiten Längenabschnitt (30) ausgebildet wird, dann die beiden Längenabschnitte (29, 30) zwischen ihren einander benachbarten Enden (33, 34) getrennt werden, und anschließend die in ihren Durchmessern (D5, D6) aufeinander abgestimmten benachbarten Enden (33, 34) unter Bildung eines Schiebesitzes zusammengesteckt werden.

14. Verfahren nach Anspruch 13, **dadurch gekennzeichnet, dass** zwischen den Enden (33, 34) ein Übergangsabschnitt (35) des doppelwandigen Rohrs (26) herausgetrennt wird.

15. Verfahren nach Anspruch 13 oder 14, **dadurch gekennzeichnet, dass** der Übergangsabschnitt (35) mit einem einzigen Trennschnitt herausgetrennt wird.

16. Verfahren nach einem der Ansprüche 13 bis 15, **dadurch gekennzeichnet, dass** die Enden (33, 34) vor dem Zusammenstecken entgratet werden.

17. Verfahren nach einem der Ansprüche 13 bis 16, **dadurch gekennzeichnet, dass** das Außenrohr (28) und das Innenrohr (27) im Bereich der benachbarten Enden (33, 34) aneinander anliegen, wobei der Außendurchmesser (D5) des einen benachbarten Endes (34) kleiner ist als der Innendurchmesser (D6) des anderen benachbarten Endes (33).

## Claims

1. Exhaust pipe with a first longitudinal section (2) with a first outer pipe (4) and a first inner pipe (5) and with a second longitudinal section (3) with a second outer pipe (6) and a second inner pipe (7), there being an annular gap (8) between the outer pipes (4, 6) and the inner pipes (5, 7) of a longitudinal section (2, 3), at least partially, **characterised in that** the two longitudinal sections (2, 3) with their adjacent ends (13, 14) are inserted into each other in longitudinally displaceable fashion, whereby at the adjacent ends (13, 14) an end piece (16) of the first outer pipe (4) surrounds an end piece (17) of the second outer pipe (6), incorporating an end section (15) of the first inner pipe (5), while the end pieces (16, 17) of the outer pipes (4, 6) and the end section (15) of the first inner pipe (5) are each longitudinally displaceable with respect to each other.

2. Exhaust pipe according to claim 1, **characterised in that** an end section (18) of the second inner pipe (7) is assigned longitudinally displaceably to the end piece (17) of the second outer pipe (6).

3. Exhaust pipe according to claim 2, **characterised in that** the end section (18) of the second inner pipe (7) abuts on the end piece (17) of the second outer pipe (6).

4. Exhaust pipe according to one of claims 1 to 3, **characterised in that** the adjacent ends (13,14) of the longitudinal sections (2, 3) are connected together in fluid-tight fashion.

5. Exhaust pipe according to one of claims 1 to 4, **characterised in that** the adjacent end pieces (16, 17) of the outer pipes (4, 6) have a fluid-tight encapsulation formed by a component (23) which compensates relative displacements of the end pieces (16, 17).

6. Exhaust pipe according to claim 5, **characterised in that** the component is an expansion bellows (23).

7. Exhaust pipe according to one of claims 1 to 6, **characterised in that** flanges (9, 10) are assigned to the ends (11, 12) of the longitudinal sections (2, 3) facing away from each other.

8. Exhaust pipe according to claim 7, **characterised in that** the outer pipes (4, 6) and the inner pipes (5, 7) are at least indirectly solidly connected with the assigned flanges (9, 10).

9. Exhaust pipe according to one of claims 1 to 8, **characterised in that** the inner diameter (D) of the second inner pipe (7) is constant and corresponds to the inner diameter (D) of the first inner pipe (5) in the area of the annular gap (8).

10. Exhaust pipe according to one of claims 1 to 9, **characterised in that** the outer pipes (6) are reduced in diameter in the area of the ends (11, 13; 12, 14).

11. Exhaust pipe according to one of claims 1 to 10, **characterised in that** the individual longitudinal sections (2, 3) are produced by inner high-pressure forming.

12. Exhaust pipe according to one of claims 1 to 11, **characterised in that** the annular gap (8) is filled with an insulating material.

13. Method for producing an exhaust pipe, in which an annular gap (31, 32) is formed at least partly between an inner pipe (27) and an outer pipe (28) of a double-walled pipe (26) by inner high-pressure forming, **characterised in that** a first annular gap (31) is formed in a first longitudinal section (29) and a second annular gap (32) in a second longitudinal section (30), then the two longitudinal sections (29, 30) are separated between their adjacent ends (33, 34), after which the adjacent ends (33, 34) which are matched to each other's diameters (D5, D6) are inserted into each other, forming a close sliding fit.

14. Method according to claim 13, **characterised in that** a transitional section (35) of the double-walled pipe (26) is removed from between the ends (33, 34).

15. Method according to claim 13 or 14, **characterised in that** the transitional section (35) is removed using a single separation step.

16. Method according to one of claims 13 to 15, **characterised in that** the ends (33, 34) are deburred prior to being joined together.

17. Method according to one of claims 13 to 16, **characterised in that** the outer pipe (28) and the inner pipe (27) abut on each other in the area of the adjacent ends (33, 34) whereby the outer diameter (D5) of the one adjacent end (34) is smaller than the inner diameter (D6) of the other adjacent end (33).

## Revendications

1. Ligne d'échappement avec une première section longitudinale (2) avec un premier tube extérieur (4) et un premier tube intérieur (5) ainsi qu'une deuxième section longitudinale (3) avec un deuxième tube extérieur (6) et un deuxième tube intérieur (7), sachant qu'il y a au moins par section une fente annulaire (8) entre les tubes extérieurs (4, 6) et les tubes intérieurs (5, 7) d'une section longitudinale (2, 3), **caractérisée en ce que** les deux sections longitudinales (2, 3) avec leurs extrémités (13, 14) adjacentes les unes aux autres sont enfichées l'une dans l'autre de manière longitudinalement déplaçable l'une par rapport à l'autre, dans laquelle aux extrémités adjacentes (13, 14), un embout (16) du premier tube extérieur (4) enveloppe un embout (17) du deuxième tube extérieur (6) par intégration d'une section d'extrémité (15) du premier tube intérieur (5), les embouts (16, 17) des tubes extérieurs (4, 6) et la section d'extrémité (15) du premier tube intérieur (5) étant respectivement longitudinalement déplaçables les uns par rapport aux autres.

2. Ligne d'échappement selon la revendication 1, **caractérisée en ce qu'**une section d'extrémité (18) du deuxième tube intérieur (7) est associée de manière longitudinalement déplaçable à l'embout (17) du deuxième tube extérieur (6).

3. Ligne d'échappement selon la revendication 2, **caractérisée en ce que** la section d'extrémité (18) du deuxième tube intérieur (7) s'appuie contre l'embout (17) du deuxième tube extérieur (6).

4. Ligne d'échappement selon l'une quelconque des revendications 1 à 3, **caractérisée en ce que** les extrémités adjacentes (13, 14) des sections longitudinales (2, 3) sont reliées ensemble de manière étanche aux fluides.

5. Ligne d'échappement selon l'une quelconque des revendications 1 à 4, **caractérisée en ce que** les embouts adjacents (16, 17) des tubes extérieurs (4, 6) sont encapsulés de manière étanche aux fluides par un composant (23) compensant les déplacements relatifs des embouts (16, 17).

6. Ligne d'échappement selon la revendication 5, **caractérisée en ce que** le composant est un soufflet (23).

7. Ligne d'échappement selon l'une quelconque des revendications 1 à 6, **caractérisée en ce que** des brides (9, 10) sont affectées aux extrémités (11, 12) opposées les unes aux autres des sections longitudinales (2, 3).

8. Ligne d'échappement selon la revendication 7, **caractérisée en ce que** les tubes extérieurs (4, 6) et les tubes intérieurs (5, 7) sont reliés au moins indirectement de façon fixe avec les brides associées (9, 10).

9. Ligne d'échappement selon l'une quelconque des revendications 1 à 8, **caractérisée en ce que** le diamètre intérieur (D) du deuxième tube intérieur (7) est constant et correspond au diamètre intérieur (D) du premier tube intérieur (5) au niveau de la fente annulaire (8).

10. Ligne d'échappement selon l'une quelconque des revendications précédentes 1 à 9, **caractérisée en ce que** le diamètre des tubes extérieurs (6) est réduit au niveau des extrémités (11, 13 ; 12, 14).

11. Ligne d'échappement selon l'une quelconque des revendications 1 à 10, **caractérisée en ce que** les différentes sections longitudinales (2, 3) sont fabriquées par déformation à haute pression intérieure.

12. Ligne d'échappement selon l'une quelconque des revendications 1 à 11, **caractérisée en ce que** la fente annulaire (8) est remplie d'un matériau isolant.

13. Procédé de fabrication d'une ligne d'échappement, dans le cadre duquel une fente annulaire (31, 32) est réalisée au moins par section entre un tube intérieur (27) et un tube extérieur (28) d'un tube à double paroi (26) par déformation à haute pression intérieure, **caractérisé en ce qu'**une première fente annulaire (31) est réalisée dans une première section longitudinale (29) et une deuxième fente annulaire (32) est réalisée dans une deuxième section longitudinale (30), puis les deux sections longitudinales (29, 30) sont séparées entre leurs extrémités (33, 34) adjacentes les unes aux autres et enfin, les extrémités adjacentes (33, 34), dont les diamètres (D5, D6) sont ajustés les uns aux autres, sont enfichées en formant un siège coulissant.

14. Procédé selon la revendication 13, **caractérisé en ce qu'**une section de transition (35) du tube à double paroi (26) est retirée entre les extrémités (33, 34).

15. Procédé selon la revendication 13 ou 14, **caractérisé en ce que** la section de transition (35) est retirée avec une seule coupe.

16. Procédé selon l'une quelconque des revendications 13 à 15, **caractérisé en ce que** les extrémités (33, 34) sont ébavurées avant l'enfichage.

17. Procédé selon l'une quelconque des revendications 13 à 16, **caractérisé en ce que** le tube extérieur (28) et le tube intérieur (27) s'appuient l'un contre l'autre au niveau des extrémités adjacentes (33, 34), le diamètre extérieur (D5) de l'une des extrémités adjacentes (34) étant inférieur au diamètre intérieur (D6) de l'autre extrémité adjacente (33).
